# EUROPEAN PATENT APPLICATION

(11) **EP 4 391 162 A1**
(43) Date of publication of application: **26.06.2024**
(21) Application number: 22215838.8
(22) Date of filing: 22.12.2022
(51) Int. Cl.: H01M 50/107, H01M 10/04, H01M 10/0587, H01M 10/654

(54) **CYLINDRICAL BATTERY CELL WITH REDUCED INTERNAL WINDING RADIUS**

(71) Applicant: VOLVO TRUCK CORPORATION, 405 08 Göteborg (SE)
(72) Inventor: AHMED, Istaq, 422 44 Göteborg (SE); TINTIGNAC, Sophie, 418 71 Göteborg (SE); MCCARTHY, Benjamin, 439 55 Åsa (SE); CHOI, Youngjin, 421 73 Västra Frölunda (SE)
(74) Representative: Ström & Gulliksson AB

(57) **Abstract**

A battery cell (1) comprising a wound electrode assembly (2) arranged in a cell casing (3), wherein said wound electrode assembly (2) comprises a positive electrode substrate (4) on which a positive electrode active material (5) is coated; a negative electrode substrate (6) on which a negative electrode active material (7) is coated; a separator (8) positioned between the positive and negative electrode substrates, wherein the separator (8) insulates a positive electrode (9) from a negative electrode (10); and core portion (11) of the wound electrode assembly, wherein said core portion (11) comprises a through hole (12) extending in a vertical direction (V) of said battery cell (1), and wherein said through hole (12) has a diameter (D) in the range of 4 to 7 mm.

## Description

### TECHNICAL FIELD

The disclosure relates generally to a cylindrical battery cell such as a jelly roll battery cell. In particular aspects, the disclosure relates to a cylindrical battery cell with reduced internal winding radius. The disclosure can be applied in any battery cell application, including electrical vehicle, stationary and power tools, laptops, and consumer electronics. Although the disclosure may be described with respect to a particular vehicle, the disclosure is not restricted to any particular vehicle.

### BACKGROUND

Today, a cylindrical battery cell, especially cylindrical format is produced by winding the electrode pairs around a small radius mandrill and placed into a cell can, welded and sealed. A common problem associated with cylindrical battery cells are their tendency to become overheated on the inside, which causes delamination of the electrodes, short-circuits and malfunction. Even if the inside of the cell is cooled through the outside, the temperature increase may lead to some delamination of active material from current collectors, which may lead to premature aging and may also force electrolyte out of the separator material causing additional aging mechanisms called dry spots in the cell. Further to this, during cycling of the battery cell, i.e. charging and discharging the anode expands and then contracts to the original size, during long term use of the battery cell this may lead to delamination in combination with the heat effects. This is particularly damaging to the inner portions of the battery cell.

### SUMMARY

According to a first aspect of the disclosure, there is provided a battery cell comprising a wound electrode assembly arranged in a cell casing, wherein said wound electrode assembly comprises a positive electrode substrate on which a positive electrode active material is coated; a negative electrode substrate on which a negative electrode active material is coated; a separator positioned between the positive and negative electrode substrates, wherein the separator insulates a positive electrode from a negative electrode; and core portion of the wound electrode assembly, wherein said core portion comprises a through hole extending in a vertical direction of said battery cell, and wherein said through hole has a diameter in the range of 4 to 7 mm.

In a conventional wound battery cell the inner portion or through hole may have a diameter around 3 mm. The low radius of curvature in which the initial windings are subjected are suggested to cause the delamination in conjunction with the increased amount of heat. In the inventive battery cell the first inner windings of the electrode assembly or jelly-roll have been reduced. The first aspect may seek to reduce the premature aging effects caused by delamination of active material from the electrode substrates or metal current collectors. The technical effect provided may be that with this change of mechanical design, the tap density required for the classification of the active material could be relaxed thus reducing the cost of active material production and conditioning.

In some examples, said through hole may have a diameter in the range of 4.5 to 6.5 mm.

In some examples, said through hole may have a diameter in the range of 5 to 6 mm.

In some examples, said through hole may have a diameter of about 5.5 mm.

In some examples, the battery cell may be a cylindrical battery cell.

In some examples, the electrode substrate may be a conductive substrate, and said conductive substrate may be a metal foil.

In some examples, said metal foil may be any one of an aluminum and a copper foil.

In some examples, the core portion may further comprise a tubular sleeve.

The tubular sleeve may be formed from the same material as the casing material, and may provide the technical effect of providing for a flow pathway of for instance a liquid coolant on the inside of the battery cell.

Some examples, the electrode substrate or the electrode has a thickness in the range of 50 to 100 µm.

In some examples, the negative electrode substrate, or the negative electrode or anode, or said positive electrode substrate or said positive electrode or cathode, may have a thickness of around 50 µm and wherein the core portion through hole has a diameter of about 5.5 mm. This may be equivalent to a reduction of the five inner windings of a conventional cylindrical battery cell or a so called energy cell.

In some examples, the negative electrode substrate, or the negative electrode or anode, or said positive electrode substrate or said positive electrode or cathode, may have a thickness of around 100 µm and wherein the core portion through hole has a diameter of about 5.5 mm.

This may be equivalent to a reduction of the three inner windings of a conventional cylindrical battery cell or a so called power cell.

According to a second aspect there is provided a method for manufacturing a battery cell according to the first aspect, comprising: providing a negative electrode material onto a negative substrate material to form a negative electrode; providing a positive electrode material onto a positive substrate material to form a positive electrode; providing at least one separator layer; arranging said negative electrode, said positive electrode and said separator or insulating layer to form an electrode assembly, having a sandwich configuration such that the insulating layer are arranged at least between said negative and positive electrode, winding said electrode assembly to form a cylindrical electrode assembly, such that a core portion is formed having a through hole extending in a vertical direction of the assembly, and wherein said through hole has a diameter in the range of 4 to 7 mm; and placing said cylindrical electrode assembly in a casing to form said battery cell.

In some examples, the through hole may have a diameter in the range of 4.5 to 6.5 mm, or in the range of 5 to 6 mm.

In some examples, the through hole may have a diameter of about 5.5 mm.

In some examples, the substrate material may be a conductive substrate and may further have a thickness in the range of 50 to 100 µm.

In some examples, the method according to the second aspect may further comprise providing said inner portion with a tubular sleeve.

According to a third aspect there is provided vehicle comprising the battery cell according to the first aspect or, as obtained by the method of the second aspect. The vehicle may be an electrical vehicle.

According to another aspect there is provided the use of a battery cell according to the first aspect in an electrical appliance, such as a vehicle, a stationary or power tool, or a consumer electronics.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** shows an exemplary battery cell.
**FIG. 2** shows an exploded view of an exemplary battery cell.
**FIG. 3** shows the cross-sectional view along line A-A of an exemplary battery cell.

### DETAILED DESCRIPTION

Aspects set forth below represent the necessary information to enable those skilled in the art to practice the disclosure.

In cylindrical battery cells electrode pairs are wound around a small radius mandrill and placed inside a casing or can. During cycling of the battery cell, the anode material expands and contracts when the cell is charged and discharged respectively, which together with delamination caused by heating of the cell, and the internal pressure of the cell due to the delamination and early onset aging conditions, may force electrolyte out of the separator material thereby causing additional aging mechanisms called dry spots in the cell. Thus further reducing the life and active content of the cell. With the inventive reduction of the first, or innermost, inner windings of the jelly-roll the premature aging mechanism caused by delamination of active material from the metal current collectors may thus be significantly reduced, since it is the low radius of curvature in which the initial windings are subjected which is suggested to cause the delamination in conjunction with the increase amount of heat. With this changed mechanical design, the tap density required for the classification of the active material may also be relaxed, thus reducing the cost of active material production and conditioning.

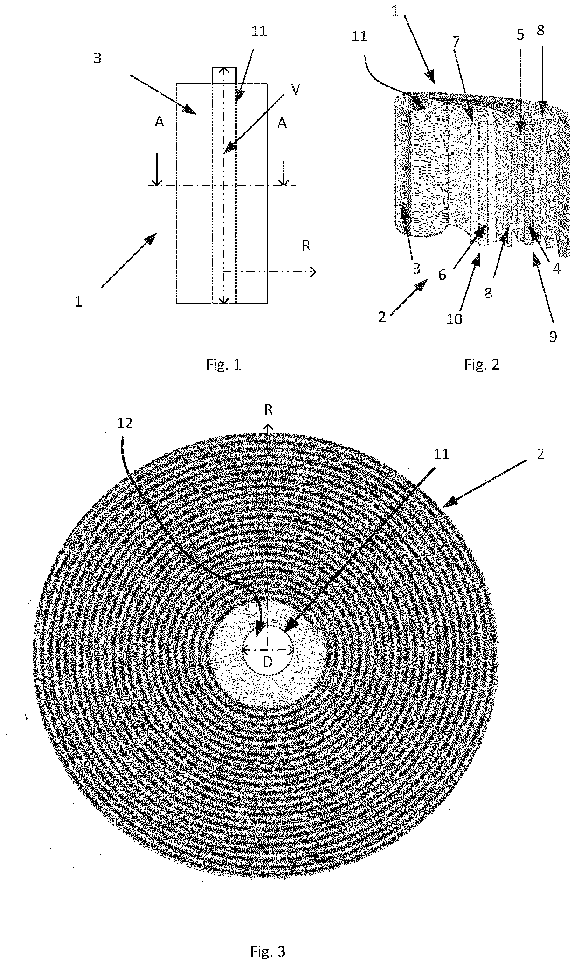

**FIG. 1** is an exemplary battery cell 1 having a cell casing 3. FIG. 1 illustrates the extension of the lengthwise vertical axis V, and the radial direction R of the battery cell, as well as the line A-A defining the cross-sectional view showing the inner portion 11, which is further illustrated in FIG. 3.

**FIG. 2** is also an exemplary battery cell 1 comprising a wound electrode assembly 2. The electrode assembly 2 is arranged in a cell casing 3 enclosing the outer portion of the electrode assembly. The battery cell further has an inner or core portion 11 around which the electrode assembly is wound.

The said wound electrode assembly 2 comprises a positive electrode substrate 4 on which a positive electrode active material 5 is coated, thus forming a positive electrode 9 or cathode, and a negative electrode substrate 6 on which a negative electrode active material 7 is coated, thus forming a negative electrode or anode 10. The active material 5, 7 may be coated on both or only one side of the electrode substrate 4, 6. The electrode substrate may be a conductive substrate, such as a metal foil. The metal foil may be a copper or aluminum metal foil, depending on the polarity of the electrode.

The electrode substrate 4, 6 or electrode 9, 10 may have a thickness in the range of 50 to 100 µm. Conventionally a so called energy cell may have a 100 µm thick anode 10, and a so called power type cell may have a 50 µm thick anode 10.

The wound electrode assembly 2 further comprises at least one separator or insulating layer 8 positioned between the positive and negative electrodes 9, 10. The separator 8 thus insulates a positive electrode, or cathode, 9 from a negative electrode, or anode, 10.

The assembly 2 may thus be formed by layering the electrodes and the separator or insulating layers 8 in a sandwich configuration, and then winding the layered configuration in a spiral configuration to form the wound assembly. Such an assembly is conventionally referred to as a j elly-roll configuration. The j elly-roll thus have an inner or core portion 11 and an outer portion which is closer to the casing 3. The wound or rolled-up assembly may be placed inside a casing or can, which may be welded to form the battery cell 1.

As illustrated in the schematic cross-sectional view along lines A-A in **FIG. 3** the core portion 11 of the wound electrode assembly 2 comprises a through hole 12 extending in a vertical direction V of said battery cell 1. FIG. 3 is meant to illustrate the diameter of the through hole 12, and does not necessarily depict all parts of the electrode assembly 2.

The core portion 11 may in one example comprise an inner sleeve or casing for the hole through design. This may allow for a liquid coolant to circulate through the inner portion of the battery cell, which may further increase the cooling of the inside of the battery cell 1.

The inner portion 11 and the through hole 12, may have a, centrally measured or defined, diameter D, extending in in the radial direction R, in the range of 4 to 7 mm. This diameter is in general larger than what is conventionally found in cylindrical battery cells, where the diameter usually is around 3 mm.

In one example, when the battery cell is larger the diameter of the through hole may be in the range of 4 to 20 mm. The diameter of the through hole will be depending on the size of the battery cell, and the thickness of the electrode substrate layers or the electrodes. In the present disclosure the battery cell may be a conventional 2170 or 4680 battery. If the battery cell has a larger size the diameter of the through hole may be larger.

This means that the inner windings of the electrode assembly 2 have been reduced or removed or relaxed in relation to a conventional cylindrical battery cell. How many of the inner windings that have been reduced or removed depends on the type of cell, or the thickness of the electrodes. In general a reduction of up to the first, or innermost windings, in the range of 3 to 6 windings, is preferable.

In one example the diameter D is in the range of 4.5 to 6.5 mm.

In one example the diameter D of the through hole 12 is in the range of 4 to 6 mm.

In one example the diameter D is around 5.5 mm.

In one example the anode (negative electrode) 10 or the anode substrate 6, or said cathode (positive electrode) substrate 4 or said cathode 9 may have a thickness of about 100 µm, and the through hole 12 a diameter of about 5.5 mm. This may correspond to a reduction of the first, or innermost, three windings for an energy cell.

In one example the anode 10 or the anode substrate 6, or said cathode substrate 4 or said cathode 9 may have a thickness of about 50 µm, and the through hole 12 a diameter of about 5.5 mm. This may correspond to a reduction of up to the first, or innermost, five windings for the power type cells.

The present disclosure will now be described by way of examples.

Example 1: A battery cell 1 comprising a wound electrode assembly 2 arranged in a cell casing 3, wherein said wound electrode assembly 2 comprises a positive electrode substrate 4 on which a positive electrode active material 5 is coated; a negative electrode substrate 6 on which a negative electrode active material 7 is coated; a separator 8 positioned between the positive and negative electrode substrates, wherein the separator 8 insulates a positive electrode 9 from a negative electrode 10; and core portion 11 of the wound electrode assembly, wherein said core portion 11 comprises a through hole 12 extending in a vertical direction V of said battery cell 1, and wherein said through hole 12 has a diameter D in the range of 4 to 20 mm, or in the range of 4 to 15 mm, or in the range of 4 to 7 mm.

Example 2: The battery cell 1 according to example 1, wherein said through hole 12 has a diameter D in the range of 4.5 to 6.5 mm.

Example 3: The battery cell 1 according to example 1, wherein said through hole (12) has a diameter D in the range of 5 to 6 mm.

Example 4: The battery cell 1 according to example 1, wherein said through hole (12) has a diameter D of about 5.5 mm.

Example 5: The battery cell according to any one of examples 1 to 4, wherein the battery cell is cylindrical battery cell.

Example 6: The battery cell according to any one of the preceding examples, wherein said electrode substrate 4, 6 is a conductive substrate 4, 6 and wherein said conductive substrate is a metal foil.

Example 7: The battery cell 1 according to example 6, wherein said metal foil is any one of an aluminum and a copper foil.

Example 8: The battery cell 1 according to any one of the preceding examples, wherein said core portion 11 further comprises a tubular sleeve.

Example 9: The battery cell 1 according to any one of the preceding examples,
wherein said electrode substrate 4, 6 or said electrodes 9, 10 has a thickness in the range of 50 to 100 µm.

Example 10: The battery cell 1 according to any one of the preceding examples, wherein said negative electrode substrate 6 or negative electrode 10, or said positive electrode substrate 4 or said positive electrode 9, has a thickness of around 50 µm and wherein the core portion through hole has a diameter of about 5.5 mm.

Example 11: The battery cell according to any one of examples 1 to 9, wherein said negative electrode substrate 6 or negative electrode 10, or said positive electrode substrate 4 or said positive electrode 9 has a thickness of around 100 µm and wherein the core portion through hole has a diameter of about 5.5 mm.

Example 12: A method for manufacturing a battery cell according to any one of examples 1 to 11, comprising: providing a negative electrode material 7 onto a negative substrate material 6 to form a negative electrode 10; providing a positive electrode material 5 onto a positive substrate material 4 to form a positive electrode 9; providing at least one separator layer 8; arranging said negative electrode 10, said positive electrode 9 and said insulating layer 8 to form an electrode assembly 2, having a sandwich configuration such that the insulating layer 8 is arranged at least between said negative 10 and positive 9 electrode, winding said electrode assembly 2 to form a cylindrical electrode assembly, such that a core portion 11 is formed having a through hole 12 extending in a vertical direction V, and wherein said through hole 12 has a diameter D in the range of 4 to 7 mm; and placing said cylindrical electrode assembly 2 in a casing 3 to form said battery cell 1.

Example 13: The method for manufacturing a battery cell 1 according to example 12, wherein said through hole 12 has a diameter D in the range of 4.5 to 6.5 mm.

Example 14: The method for manufacturing a battery cell 1 according to example 12, wherein said through hole 12 has a diameter D in the range of 5 to 6 mm.

Example 15: The method for manufacturing a battery cell 1 according to example 13, wherein said though hole 12 has a diameter D of about 5.5 mm.

Example 16: The method for manufacturing a battery cell 1 according to any one of examples 12 to 14, wherein said substrate material 4, 6 is a conductive substrate 4, 6.

Example 17: The method for manufacturing a battery cell 1 according to any one of examples 12 to 16, wherein said conductive substrate 4, 6 has a thickness in the range of 50 to 100 µm.

Example 18: The method for manufacturing a battery cell 1 according to any one of examples 12 to 17, wherein said method further comprises providing said inner portion 11 with a tubular sleeve.

Example 19: A vehicle comprising the battery cell 1 according to any one of examples 1 to 11.

Example 20: The vehicle according to example 19, wherein said vehicle is an electrical vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery cell (1) comprising a wound electrode assembly (2) arranged in a cell casing (3), wherein said wound electrode assembly (2) comprises a positive electrode substrate (4) on which a positive electrode active material (5) is coated; a negative electrode substrate (6) on which a negative electrode active material (7) is coated; a separator (8) positioned between the positive and negative electrode substrates, wherein the separator (8) insulates a positive electrode (9) from a negative electrode (10); and core portion (11) of the wound electrode assembly, wherein said core portion (11) comprises a through hole (12) extending in a vertical direction (V) of said battery cell (1), and wherein said through hole (12) has a diameter (D) in the range of 4 to 7 mm.

2. The battery cell (1) according to claim 1, wherein said through hole (12) has a diameter (D) in the range of 4.5 to 6.5 mm, or has a diameter (D) in the range of 5 to 6 mm.

3. The battery cell (1) according to claim 1, wherein said through hole (12) has a diameter (D) of about 5.5 mm.

4. The battery cell (1) according to any one of claims 1 to 3, wherein the battery cell is cylindrical battery cell.

5. The battery cell (1) according to any one of the preceding claims, wherein said core portion (11) further comprises a tubular sleeve.

6. The battery cell (1) according to any one of the preceding claims, wherein said electrode substrate (4, 6) or electrode (9, 10) has a thickness in the range of 50 to 100 µm.

7. The battery cell (1) according to any one of the preceding claims, wherein said negative electrode substrate (6) or negative electrode (10), or said positive electrode substrate (4) or said positive electrode (9), has a thickness of around 50 µm and wherein the core portion through hole has a diameter of about 5.5 mm.

8. The battery cell according to any one of claims 1 to 6, wherein said negative electrode substrate (6) or negative electrode (10), or said positive electrode substrate (4) or said positive electrode (9), has a thickness of around 100 µm and wherein the core portion through hole has a diameter of about 5.5 mm.

9. A method for manufacturing a battery cell according to any one of claims 1 to 8, comprising:
providing a negative electrode material (7) onto a negative substrate material (6) to form a negative electrode (10);
providing a positive electrode material (5) onto a positive substrate material (4) to form a positive electrode (9):
providing at least one separator layers (8);
arranging said negative electrode (10), said positive electrode (9) and said insulating layer (8) to form an electrode assembly (2), having a sandwich configuration such that the separator layer (8) is arranged at least between said negative (10) and positive (9) electrode,
winding said electrode assembly (2) to form a cylindrical electrode assembly, such that a core portion (11) is formed having a through hole (12) extending in a vertical direction (V), and wherein said through hole (12) has a diameter (D) in the range of 4 to 7 mm; and
placing said cylindrical electrode assembly (2) in a casing (3) to form said battery cell (1).

10. The method for manufacturing a battery cell (1) according to claim 9, wherein said through hole (12) has a diameter (D) in the range of 4.5 to 6.5 mm, or has a diameter (D) in the range of 5 to 6 mm.

11. The method for manufacturing a battery cell (1) according to claim 9, wherein said though hole (12) has a diameter (D) of about 5.5 mm.

12. The method for manufacturing a battery cell (1) according to any one of claims 9 to 11, wherein said conductive substrate (4, 6) or said electrode (9, 10) has a thickness in the range of 50 to 100 µm.

13. The method for manufacturing a battery cell (1) according to any one of claims 9 to 12, wherein said method further comprises providing said inner portion (11) with a tubular sleeve.

14. A vehicle comprising the battery cell (1) according to any one of claims 1 to 8.

15. The vehicle according to claim 14, wherein said vehicle is an electrical vehicle.
